# EUROPÄISCHE PATENTSCHRIFT

(11) **EP 2 542 466 B1**
(45) Veröffentlichungstag und Bekanntmachung des Hinweises auf die Patenterteilung: **24.08.2016**
(21) Anmeldenummer: 11712461.0
(22) Anmeldetag: 03.03.2011
(51) Int. Cl.: B63B 22/08, B63C 7/06, F16B 45/02

(54) **AUSLÖSEVORRICHTUNG FÜR EINE LAST AN EINER EINRICHTUNG UND UNTERWASSEREINRICHTUNG**
RELEASE APPARATUS FOR A LOAD ON A DEVICE AND UNDERWATER DEVICE
DISPOSITIF DE LIBÉRATION POUR UNE CHARGE SUR UNE INSTALLATION ET INSTALLATION IMMERGÉE

(30) Priorität: 03.03.2010 DE 102010010161
(43) Veröffentlichungstag der Anmeldung: 09.01.2013
(73) Patentinhaber: Evologics GmbH, 13355 Berlin (DE)
(72) Erfinder: PRERADOVIC, Oliver, 13629 Berlin (DE); MISCHNICK, David, 12103 Berlin (DE)
(74) Vertreter: Bittner, Thomas L.
(86) Internationale Anmeldenummer: PCT/DE2011/075034
(87) Internationale Veröffentlichungsnummer: WO 2011/107093

(56) Entgegenhaltungen:
- FR-A- 958 040
- GB-A- 2 336 398
- US-A- 3 228 332
- US-A- 3 504 407

## Beschreibung

Die Erfindung betrifft eine Auslösevorrichtung für eine Last an einer Einrichtung, insbesondere eine Unterwassereinrichtung, sowie eine Unterwassereinrichtung mit einer Auslösevorrichtung.

### Hintergrund der Erfindung

Unterwassereinrichtungen sind unter anderem verankerte Bodenstationen oder Unterwasserfahrzeuge, wie zum Beispiel AUVs ("*Autonomous Underwater Vehicle*") und ROVs ("*Remotly Operated Vehicle*"). Diese werden in vielen Bereichen der Meeresforschung und -beobachtung eingesetzt, zum Beispiel zur Inspektion von Ölplattformen, von Schiffen, von Pipelines, zur Unterstützung beim Verlegen von Tiefseekabeln, bei der Suche nach Unterwasserminen, zur Vermessung von Salzkonzentrationen und zur Erforschung als auch Kartographierung der Ozeane.

Ein integrierter Energievorrat ermöglicht AUVs und Bodenstationen ein völlig autonomes Arbeiten, d.h. ohne Verbindung zu einem Versorgungsschiff. Beide Systeme werden in Tiefen von einigen Metern bis zu wenigen Kilometern unter der Wasseroberfläche eingesetzt.

Bei AUVs beträgt die durchschnittliche Missionsdauer mehrere Stunden bis wenige Tage. Ist das Auftauchen während einer Mission zum Beispiel aufgrund einer Funktionsstörung oder eines Energieverlusts nicht mehr möglich, wird eine Einrichtung benötigt, mit der eine Bergung des AUV's vom Meeresboden bzw. aus dem Ozean erfolgen kann. Eine Möglichkeit besteht darin, eine Vorrichtung vorzusehen, mit der das AUV selbstständig zur Wasseroberfläche gelangen kann. Dies lässt sich zum Beispiel mit dem Abtrennen eines Gewichts vom AUV erreichen, da dadurch der Auftrieb des Fahrzeugs erhöht wird.

Ein ähnliches Konzept wird bei der Bergung von Bodenstationen angewendet. Der typische Aufbau einer solchen Unterwasser-Bodenstation beinhaltet Auftriebskörper, Messapparaturen, einen akustischen Auslöser und ein Gewicht. Sind die durchzuführenden Messungen beendet, bzw. ist der Energievorrat der Messapparatur verbraucht, wird ein Signal von der Messapparatur oder einem Versorgungsschiff an den Auslöser gesendet, welcher daraufhin die Verbindung zum Anker trennt. Die Messapparatur gelangt durch den Auftrieb des an der Oberseite des Gesamtaufbaus befindlichen Auftriebskörpers an die Wasseroberfläche.

Die Abtrennung eines Notgewichts oder eines Auftriebkörpers kann auf verschiedene Weisen realisiert werden. In den Dokumenten US 3,228,332, US 3,463,113, US 3,577,950, US 3,848,226, US 4,118,060, US 4,136,415, US 5,418,757 und US 6,379,202 werden jeweils mechanische Auslösemechanismen beschrieben, die zum Beispiel zur Bergung von Bodenstationen eingesetzt werden. Hierbei befindet sich der abzukoppelnde Anker jeweils an einem Hakensystem, welches durch einen Aktor geöffnet wird.

Die Ausführung der Haken ist bei den genannten Patenten so gestaltet, dass nach Aktivierung des Aktors der Haken entriegelt wird und anschließend aufgrund einer auf den Haken wirkenden Kraft, welche aus der Auftriebskraft der Auftriebskörper resultiert, gedreht bzw. geöffnet wird. Auslösemechanismus und Anker müssen sich dazu in einer definierten Stellung zueinander befinden. Diese wird durch die zum Erdmittelpunkt wirkende Gewichtskraft der Last und der in entgegen gesetzter Richtung wirkenden Auftriebskraft der Auftriebskörper bestimmt. Bei Schräglage kann es daher zum Versagen des Auslösemechanismus kommen.

Bei den bekannten Vorrichtungen ist die Anordnung von Hakensystem und Aktor zueinander als nachteilig zu betrachten, da die an der Bodenstation ziehenden Auftriebskörper ständig mit einem Teil ihrer Auftriebskraft auf den Hakenöffnungsmechanismus wirken. Der Aktor muss also bei Aktivierung der Vorrichtung, je nach Größe der Auftriebskörper und damit ihrer erzeugten Auftriebskraft, eine unterschiedlich große Haft- und Gleitreibung an der Verbindungsstelle zwischen Haken und Anker überwinden. Bei höheren Auftriebskräften benötigt daher der Öffnungsmechanismus mehr Energie.

Aus dem Dokument US 3,358,254 ist ein weiterer mechanischer Auslösemechanismus für Unterwasserbodenstationen bekannt, bei dem der Anker durch das Freigeben eines Sperrbolzens abgekoppelt werden kann. Der Sperrbolzen wird bis zu seiner Aktivierung durch ein mit einem Aktor verbundenen Stabelement an seiner Position gehalten. Erfolgt die Aktivierung des Aktors, wird das Stabelement aus seiner Ruheposition bewegt und der Sperrbolzen freigegeben. Kritisch erscheint hierbei die Fixierung des Stabelements in der Ruheposition. Diese wird durch die Vorspannung des Stabelements mittels einer Feder erreicht. Durch diesen Zusammenhang lässt sich der Auslösemechanismus nur mit einer begrenzt hohen Auftriebskraft versehen. Übersteigt die Kraftwirkung der Auftriebskörper in Auslöserichtung die der Feder, so besteht die Gefahr, dass die Vorrichtung geöffnet wird. Der Aktor muss hierbei auch entsprechend ausgelegt werden, da er zum Öffnen die ihm entgegen wirkende Federkraft überwinden muss.

Eine weitere Möglichkeit für die Gestaltung eines Auslösemechanismus wird im Dokument US 3,609,825 beschrieben. Hier wird die Last über Kugeln axial an einer zylindrischen Vorrichtung gehalten. In dieser Vorrichtung befindet sich ein beweglicher Kolben, welcher auf einer Seite mit der Vorrichtung eine Druckkammer bildet und auf der anderen dem umgebenden Medium ausgesetzt ist. Mit zunehmender Tiefe erhöht sich der durch das Wasser auf den Kolben ausgeübte Druck, wodurch sich der Kolben bewegt und das Volumen der Druckkammer verkleinert wird. Hat der Kolben die Stellung erreicht, in der die Kugeln, welche die Last halten, in die im Kolben vorhanden Öffnungen rutschten kann, ist die Last frei und fällt aus der Vorrichtung. Problematisch ist hierbei die Haft- und Gleitreibung, welche zwischen den Kugeln und dem sich dazwischen axial bewegenden Zylinder entsteht. Die Reibung nimmt mit höheren Gewichtskräften zu und wirkt der axialen Bewegung des Zylinders entgegen. Schließlich ist das Auslösen der Last auch an das Erreichen einer Mindesttiefe gebunden. Die Last ist nicht in beliebigen Tiefen abwerfbar. Dies schränkt die Funktionsfähigkeit eines Unterwasserfahrzeugs erheblich ein.

Aus dem Dokument US 3,749,933 ist ein Auslösemechanismus für Bodenstationen bekannt, der durch das Entriegeln eines Verschlusses die Bodenstation vom Anker abkoppelt. Der Verschluss ist durch eine mechanische Übersetzung mit einem Aktor verbunden, welcher die von den Auftriebskörpern auf den Verschluss ausgeübte Kraft bis zum Aktor verringert. Zu bemängeln ist hierbei die hohe Anzahl der mechanischen Komponenten der verwendeten Übersetzung, welche direkt dem Seewasser ausgesetzt sind. Durch Bewuchs und Schwebeteilchen besteht die Gefahr, dass die Funktion des Mechanismus beeinträchtigt wird. Weiterhin könnte die auf den Aktor wirkende Kraft, deren Größe von der angekoppelten Auftriebskörpern abhängig ist, den Aktor beeinträchtigen oder zu einer ungewollten Auslösung führen.

Im Dokument US 6,670,735 wird ein Auslösemechanismus für ein Unterwasserfahrzeug beschrieben. Das Notgewicht wird dadurch abgeworfen, dass ein Aktor eine Spindel dreht, wodurch ein Bajonettverschluss geöffnet und das Gewicht freigegeben wird. Zwischen Verschluss und Aktor ist eine Reihe von Getrieben montiert, welche die Drehgeschwindigkeit des Aktors verringern. Weiterhin befinden sich im abzuwerfenden Gewicht Vertiefungen mit Federn, welche den Abwurf des Gewichts sicherstellen sollen. Auch bei dieser Vorrichtung besteht eine direkte Verbindung zwischen dem eigentlichen Aktor und der abzukoppelnden Last. Die Last übt somit zu jeder Zeit eine Kraft auf den Aktor und die Getriebestufen aus. Wird der Auslösemechanismus aktiviert, so muss der Aktor die durch die Last entstehenden Haft- und Gleitreibung an allen Komponenten zwischen Last und Aktor überwinden.

Alle bisher vorgestellten Auslösemechanismen weisen eine direkte Kopplung zwischen dem jeweils verwendeten Aktor und der eingesetzten Last auf. Die dadurch auf den gesamten Auslösemechanismus wirkenden Kräfte führen zu Haft- und Gleitreibung, welche einen erhöhten Energiebedarf des Aktors bewirken. Der Energiebedarf kann sich zusätzlich durch Schwebeteilchen und organischen Bewuchs erhöhen, welcher sich in den Mechanismen festsetzt. Ein weiteres Problem, das sich aus der Kopplung ergibt, besteht darin, dass die Kraft, die der Aktor aufbringen muss, direkt von der Last abhängig ist, da der Aktor gegen einen Teil der von der Last erzeugten Kraft wirken muss, um die Vorrichtung geschlossen zu halten. Last und Aktor müssen daher aufeinander abgestimmt sein und es lassen sich dadurch nur Lasten mit geringer Variation von Gewicht oder Auftrieb verwenden.

Ein Auslösemechanismus, in dem eine Entkopplung der Kräfte vollzogen ist, wird im Dokument US 3,063,395 beschrieben. Hier muss der Aktor eine fest definierte Kraft aufbringen. Diese wird für den Start eines Mechanismus verwendet, welcher, wenn einmal gestartet, selbstständig abläuft und zum Abwurf der Last führt. Durch einen entsprechenden Aufbau ist die Last vollständig vom Aktor entkoppelt. Die Abtrennung der Last vollzieht sich durch das Anziehen eines Baudenzuges, welcher eine vorgespannte Feder freigibt. Die Feder treibt einen Hammer an, der auf einen Meißel schlägt, welcher das Halteseil der Last durchtrennt. Hierbei sind besonders der recht komplexe Aufbau sowie die hohe Anzahl beweglicher Teile kritisch zu betrachten. Diese führen zu einer hohen Fehleranfälligkeit, welche sich durch die zu erwartende Ablagerung von organischen Bewuchs und Schwebeteilchen weiter erhöht.

Es sind weitere Auslösevorrichtungen bekannt, bei denen zum Aufhängen der Last ein Haken genutzt wird, auf den in seiner geschlossenen Stellung Drehmomente wirken, insbesondere von der Last selbst, was das Vorsehen zusätzlicher Sicherungsmechanismen erfordert, die ein unbeabsichtigtes Auslösen verhindern sollen. Solche Auslösevorrichtungen sind zum Beispiel in den Dokumenten US 1,035,021, US 4,136,415, US 5,513,886 sowie FR 958,040 offenbart.

Das Dokument US 3, 504,407 A beschreibt eine Auslösevorrichtung für eine Unterwassereinrichtung. Die Vorrichtung weist eine mit einem Solenoid betriebene Einrichtung auf. Kräfte wirken vorzugsweise in einer Linie, die mit der Achse des Solenoids übereinstimmt.

In dem Dokument GB 2 336 398 A ist eine Auslösevorrichtung für eine Unterwasserpumpe offenbart.

### Zusammenfassung der Erfindung

Aufgabe der Erfindung ist es, eine Auslösevorrichtung für eine Last an einer Einrichtung, insbesondere eine Unterwassereinrichtung, zu schaffen, die über einen kompakten und einfachen Mechanismus verfügt, welcher energiearm ausgelöst werden kann.

Diese Aufgabe wird durch eine Auslösevorrichtung für eine Last an einer Einrichtung, insbesondere eine Unterwassereinrichtung, nach dem unabhängigen Anspruch 1 gelöst. Geschaffen ist weiterhin eine Anordnung mit einer Auslösevorrichtung und einem Hakenbetätigungsmechanismus nach Anspruch 9. Weiterhin ist eine Unterwassereinrichtung mit einer solchen Auslösevorrichtung nach dem unabhängigen Anspruch 12 vorgesehen. Vorteilhafte Ausgestaltungen der Erfindung sind Gegenstand von abhängigen Unteransprüchen.

Die Erfindung umfasst den Gedanken einer Auslösevorrichtung für eine Last an einer Einrichtung, insbesondere einer Unterwassereinrichtung, mit einer Hakeneinrichtung, bei der ein Haken an einer Hakenhalteeinrichtung um eine Drehachse drehbar gelagert und mit Hilfe eines Hakenbetätigungsmechanismus zwischen einer geschlossenen und einer ausgelösten Stellung mittels Drehen um die Drehachse verlagerbar ist, einer Lastauflage, die an dem Haken gebildet ist und in welcher ein Haltelement der Last im nicht ausgelösten Zustand aufliegt, und einer Zwangsführung, die konfiguriert ist, die Last beim Auslösen entlang einer Auswurfrichtung zu führen, wobei beim Aufliegen des Haltelementes der Last auf der Lastauflage der Haken in der geschlossenen Stellung, hinsichtlich eines von der Last auf den Haken bezüglich der Drehung um die Drehachse ausgeübten Drehmomentes, drehmomentfrei ist.

Mit der Auslösevorrichtung ist ein im mechanischen Aufbau einfacher und kostengünstig herstellbarer Mechanismus zur Verfügung gestellt, eine Last an einer Einrichtung, insbesondere einer Unterwassereinrichtung, zu halten und bei Bedarf lastfrei hiervon zu lösen. Im Vergleich zum Stand der Technik verfügt die Auslösevorrichtung über eine nur geringe Anzahl von Einzelkomponenten. Die Auslösevorrichtung ist geeignet, Lasten mit sehr unterschiedlichem Gewicht zu halten und auszuwerfen. Bei der Nutzung der Auslösevorrichtung in Verbindung mit einer Unterwassereinrichtung ist der Betrieb der Auslösevorrichtung unabhängig von der Tauchtiefe.

Der Hakenbetätigungsmechanismus kann in seinen verschiedenen Ausführungen jeweils konfiguriert sein, den Haken (lediglich) aus der drehmomentfreien Stellung heraus zu bewegen, worauf der Haken sich dann selbsttätig, also ohne weitere Unterstützung durch den Hakenbetätigungsmechanismus in die ausgelöste Stellung verlagert. Aber auch eine weitere Unterstützung der Verlagerung des Hakens durch den Betätigungsmechanismus kann vorgesehen sein.

Die drehmomentfreie Lagerung des Hakens bei aufliegender Last in der geschlossenen Stellung sichert gegen ein unbeabsichtigtes Selbstauslösen der Auslösevorrichtung. Es können Haken beliebiger Bauform zum Einsatz kommen, zum Beispiel auch Haken mit einer S-Form.

Die Zwangsführung ist in einer Ausgestaltung konfiguriert, das Halteelement der Last und / oder einen Abschnitt der Last selbst in der Zwangsführung zu führen.

Bei geeigneter Gestaltung des Halteelementes, zum Beispiel mittels gerundeter Oberflächen, ist die Lastauflage an dem Haken in einer Ausführungsform als Auflagepunkt gebildet.

Eine Fortbildung der Erfindung kann vorsehen, dass eine Verbindungslinie zwischen der Drehachse und der Lastauflage im Wesentlichen parallel zur Auswurfrichtung verlaufend gebildet ist.

Eine bevorzugte Weiterbildung der Erfindung sieht vor, dass die Zwangsführung wenigstens teilweise in der Hakenhalteinrichtung gebildet ist.

Bei einer zweckmäßigen Ausgestaltung der Erfindung kann vorgesehen sein, dass die Zwangsführung mit einer entlang der Auswurfrichtung verlaufenden Nut gebildet ist.

Eine vorteilhafte Ausführungsform der Erfindung sieht vor, dass die Hakenhalteeinrichtung konfiguriert ist, den Haken beim Verlagern zwischen der geschlossenen und der ausgelösten Stellung zu führen, zum Beispiel mittels seitlicher Führung. Bei dieser Ausführungsform werden zum Beispiel seitliche Oberflächen des Hakens beim Verlagern zwischen der geschlossenen und der ausgelösten Stellung auf zugeordneten Oberflächen von Elementen der Hakenhalteeinrichtung geführt. Zum Beispiel sind die Elemente als aufrecht stehende Platten gebildet, zwischen denen der Haken angeordnet ist.

Bevorzugt sieht eine Fortbildung der Erfindung eine Auslöseunterstützungseinrichtung vor, die konfiguriert ist, eine unterstützende Auswurtkraft mit einer Kraftkomponente bereitzustellen, die parallel zur Auswurfrichtung wirkt. Es kann vorgesehen sein, dass die Auslöseunterstützungseinrichtung konfiguriert ist, eine Kraftwirkung im Wesentlichen ausschließlich in Auswurfrichtung zu entwickeln. Beispielsweise ist die Auslöseunterstützungseinrichtung mit einem Federkraftmechanismus gebildet, welcher die unterstützende Auswurfkraft bereitstellt.

Bei einer vorteilhaften Ausgestaltung der Erfindung kann vorgesehen sein, dass Auslöseunterstützungseinrichtung mehrseitig der Zwangsführung wirkend gebildet ist. Hierbei kann in einer Ausführungsform vorgesehen sein, dass die Kraftwirkung auf gegenüberliegenden Seiten der Zwangsführung bereitgestellt ist. Insbesondere eine hinsichtlich der Zwangsführung symmetrische Kraftbereitstellung ist bevorzugt.

Eine Weiterbildung der Erfindung kann vorsehen, dass der Hakenbetätigungsmechanismus konfiguriert ist, den Haken mittels Druckkraftbeaufschlagung aus der geschlossenen Stellung heraus zu verlagern. Hierbei kann vorgesehen sein, dass der Haken mittels des Hakenbetätigungsmechanismus bis in die ausgelöste Stellung verlagert wird. Alternativ ist ein Hakenbetätigungsmechanismus gebildet, bei dem mittels Zugkraft der Haken verlagert wird.

Eine bevorzugte Weiterbildung der Erfindung sieht vor, dass der Hakenbetätigungsmechanismus mit einem Rückhaltemechanismus gebildet ist, der für eine auf den Haken wirkende Betätigungseinrichtung eine Rückhaltekraft bereitstellt. Der Rückhaltemechanismus bewirkt in einer Ausgestaltung insbesondere eine Art Sicherung des Hakens in der geschlossenen Stellung. Ist die Betätigungseinrichtung beispielsweise mit einem Druckkraft entwickelnden Bauelement, zum Beispiel einer Druckfeder, gebildet, so entwickelt der Rückhaltemechanismus eine Gegenkraft zu der im geschlossenen Zustand auf den Haken wirkenden Druckkraft.

Bei einer zweckmäßigen Ausgestaltung der Erfindung kann vorgesehen sein, dass der Rückhaltemechanismus mit mindestens einer Rückhalteeinrichtung ausgewählt aus der folgenden Gruppe von Rückhalteeinrichtungen gebildet ist: Schmelzeinrichtung, elektromechanischer Aktor und Halteeinrichtung mit Zündmechanismus. Bei der Schmelzeinrichtung handelt es sich zum Beispiel um einen korrosionsfreien Draht, welcher zum Auslösen mit einem Stromimpuls beaufschlagt werden kann, so dass der Draht schmilzt. Hierdurch erfolgt eine Freigabe des Auslösemechanismus. In einer anderen Ausführungsform ist die Schmelzeinrichtung mit einem Draht definierter Korrosionsbeständigkeit gebildet, also einem Draht, der in definierter Art und Weise korrodiert, so dass dann die Auslösung der Last bewirkt wird. Auf diese Weise erfolgt ein vollständig energiefreies Auslösen der Last. Wird die Auslösevorrichtung zum Beispiel in Verbindung mit einer Unterwassereinrichtung verwendet, kann in Abhängigkeit von den Wassereigenschaften am Einsatzort, zum Beispiel dem Salzgehalt, vorher eine Drahtdicke berechnet werden, die nach definierter Zeit soweit geschwächt ist, dass die Auslösevorrichtung ausgelöst wird.

Eine vorteilhafte Ausführungsform der Erfindung sieht vor, dass mit der Hakenhalteeinrichtung ein Anschlag für das Haltelement der Last und / oder die Last selbst gebildet ist. Hierdurch kann in einer Ausgestaltung das Haltelement der Last in der geschlossenen Stellung des Hakens zwischen der Auflage am Haken und dem Anschlag fixiert sein.

Bevorzugt sieht eine Fortbildung der Erfindung eine Lastführung vor, die konfiguriert ist, beim Auslösen und / oder beim Ankoppeln der Last mit einem Abschnitt an der Last selbst diese führend zusammen zu wirken. Beispielsweise ist in einer Ausführungsform vorgesehen, dass Oberflächenabschnitte an der Auslösevorrichtung und / oder der diese aufnehmenden Einrichtung mit zugeordneten Oberflächenabschnitten an der Last und / oder dem Halteelement der Last zusammenwirken, derart, dass die zugeordneten Oberflächenabschnitte beim Auslösen / Ankoppeln aufeinander gleiten, so dass eine Führung gegeben ist. In einer Ausführungsform können die zugeordneten Oberflächenabschnitte schräg beziehungsweise konisch verlaufende Oberflächenabschnitte umfassen.

### Beschreibung bevorzugter Ausführungsbeispiele der Erfindung

Die Erfindung wird im Folgenden anhand von bevorzugten Ausführungsbeispielen unter Bezugnahme auf Figuren einer Zeichnung näher erläutert. Hierbei zeigen:
- Fig. 1: eine isometrische Darstellung einer Auslösevorrichtung,
- Fig. 2: einen Last tragenden Haken der Auslösevorrichtung aus Fig. 1 von vorn,
- Fig. 3: einen Abschnitt der Auslösevorrichtung aus Fig. 1 von vorn, wobei der Haken in der geschlossenen Stellung ist,
- Fig. 4: den Abschnitt der Auslösevorrichtung in Fig. 3, wobei der Haken betätigt wird und die geschlossene Stellung verlassen hat,

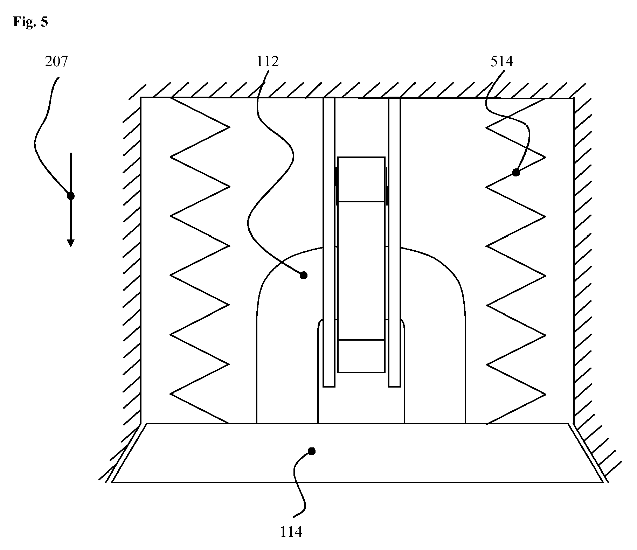

- Fig. 5: eine schematische Darstellung einer weiteren Auslösevorrichtung bei der eine Auslöseunterstützungseinrichtung mit Druckfedern vorgesehen ist,
- Fig. 6: eine schematische Darstellung der weiteren Auslösevorrichtung aus Fig. 5 in Schräglage,
- Fig. 7: eine schematische Darstellung einer Auslösevorrichtung, bei der ein Hakenbetätigungsmechanismus mit einer Druckfeder und einer Schmelzeinrichtung gebildet ist,
- Fig. 8: eine schematische Darstellung einer Auslösevorrichtung, bei der ein Hakenbetätigungsmechanismus mit einer Druckfeder und einem elektromagnetischen Aktor gebildet ist, und
- Fig. 9: eine schematische Darstellung einer Auslösevorrichtung, bei der ein Hakenbetätigungsmechanismus mit einer Druckfeder sowie einem Bolzen und hierin aufgenommener Sprengladung gebildet ist.

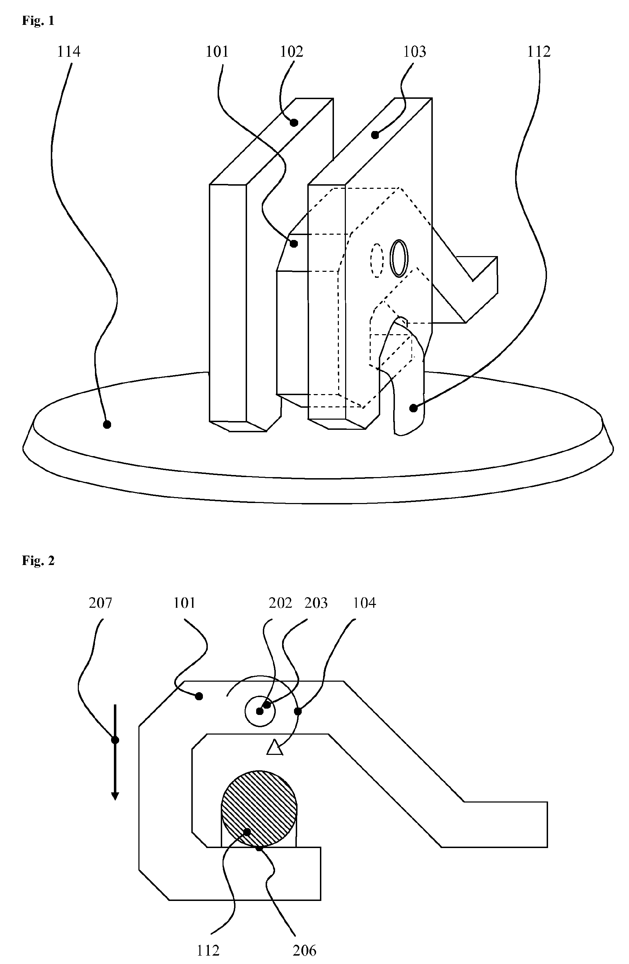

Fig. 1 zeigt eine isometrische Darstellung einer Auslösevorrichtung. Ein Haken 101 wird mit Hilfe einer Hakenhalteeinrichtung gehalten, die seitliche Platten 102 und 103 umfasst. Auf diese Weise ist der Haken 101 drehbar gelagert. Der Haken befindet sich bei der Darstellung in Fig. 1 in einer geschlossenen Stellung. Ein als Öse ausgeführtes Halteelement 112 an einer zu haltenden Last 114 wird von dem Haken 101 gehalten und gegen ein Lösen gesperrt.

Die Fig. 2 bis 4 zeigen schematische Darstellungen von Elementen der Auslösevorrichtung in Fig. 1.

Ein mittels einer Welle 203 gebildeter Lager- bzw. Drehpunkt 202 des Hakens 101 liegt auf einer Linie mit einem Hakenauflagepunkt 206 der Öse, die das Haltelement 112 für die Last 114 bildet. Diese Verbindungslinie ist parallel zu einer Auswurfrichtung 207 und einer Nut 310. Hierdurch wird erreicht, dass die an der Last 114 wirkende Kraft über die Öse 112 kein Moment auf den Haken 101 ausüben kann, so dass dieser nicht rotiert.

Der Haken 101 ist zwischen den zwei Platten 102, 103 gelagert. An der rechten Platte 103 erfolgt dies über die Welle 203 mit einer entsprechenden Lagerung 308, zum Beispiel mit Kunststofflagern für Unterwasseranwendungen. Beide Platten 102, 103 sind miteinander verbunden, um ein Verdrehen zu vermeiden, und besitzen an ihrem Ende in der Auswurfrichtung 207 eine offene, zum Beispiel rechteckförmige Öffnung 301. Die Öffnung 301 bildet mit dem Haken 101 ein geschlossenes Profil 302, in dem die Öse 112 im geschlossenen Zustand der Vorrichtung fixiert wird. Das Profil 302 ist so geformt, dass die Verbindungslinie zwischen Auflagepunkt 306 der dort hineingesetzten Öse 112 und der Drehachse des Hakens 101 parallel zur Auswurfrichtung 207 der Last 114 gerichtet sind. Der Aufbau ist so gestaltet, dass keine Verschiebung zwischen den erwähnten Punkten auftreten kann. Hierdurch kann die Last 114 unabhängig von der Ausrichtung der Vorrichtung bezüglich der an der Last 114 angreifenden Kräfte keine Kraft auf den Öffnungsmechanismus ausüben, das heißt der Haken 101 wird nicht in Drehung versetzt und die Vorrichtung kann sich nicht selbständig öffnen.

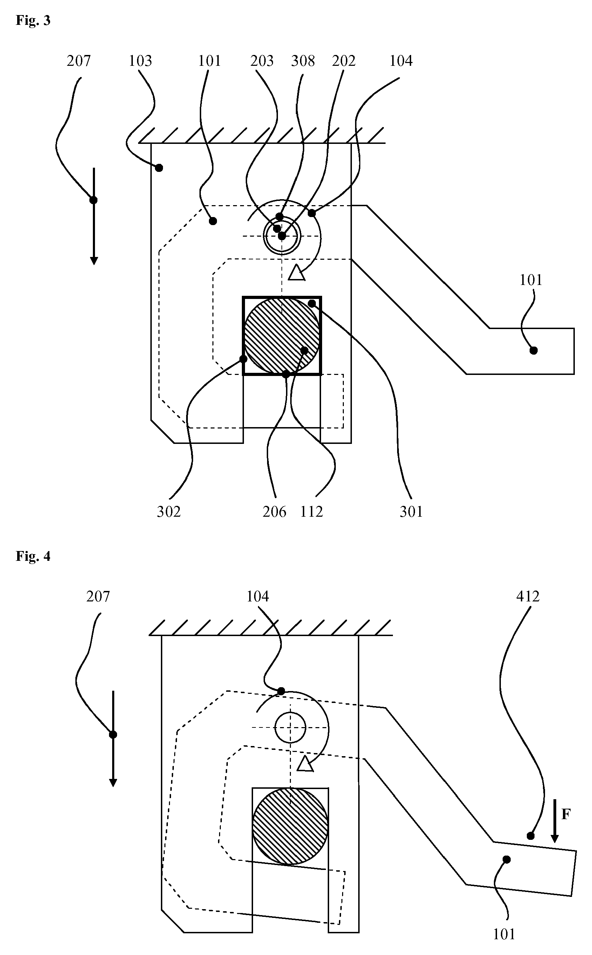

Zum Öffnen der Vorrichtung wird ein Drehmoment benötigt, welches den Haken 101 um seinen Lagerpunkt in Drehrichtung 104 dreht und so aus der drehmomentfreien Stellung bewegt, zum Beispiel mittels einer Kraft F an der Stelle 412 In Fig. 4, die in Auswurfrichtung 207 wirkt. Mittels der Drehung aus seiner Ausgangslage wirkt auf den Haken 101 zusätzlich eine Kraftkomponente in Richtung der die Last 114 bewegenden Schwerkraft, welche die Hakenöffnung zunehmend begünstigt und letztendlich dazu führt, dass bei freiliegenden Öffnungen der seitlichen Platten 102, 103, die Öse 112 und damit die an diesem befestigte Last 114 aus der Vorrichtung entweichen kann. Bei umgekehrter Montage kann sich auch ein Auftriebskörper erst lösen, wenn die Kraft 180° versetzt am Haken 101 angreift.

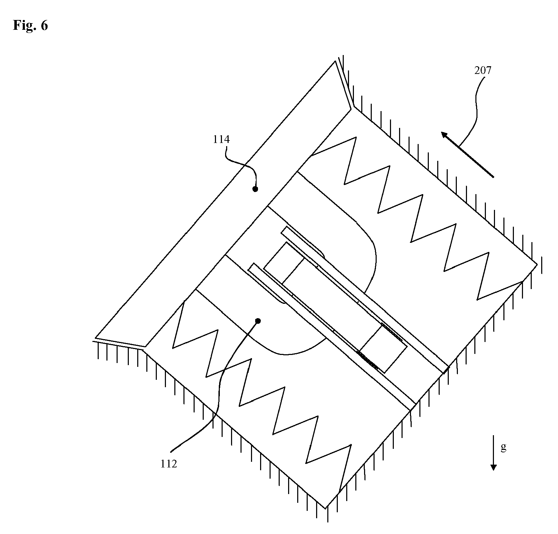

Damit das Abtrennen der Last 114 von der Vorrichtung auch bei verschiedenen Lagen der Vorrichtung bzw. der Unterwassereinrichtung, an der die Vorrichtung montiert ist, möglich ist (vgl. Fig. 6, mögliche Schräglage), muss zusätzlich zu einer Schwerkraft- oder Auftriebskomponente eine Kraft in die Richtung der Nutöffnung wirken, zum Beispiel hervorgerufen durch Druckfedern 514, so dass ein "Auswerfen" in Auswurfrichtung 207 unabhängig von der in eine beliebige Richtung wirkenden Gewichts- oder Auftriebskraft möglich ist. Durch eine geeignete Führung und einem entsprechenden Aufbau der Last 114, zum Beispiel angeschrägte Führungswände und eine runde trapezförmige Last, lässt sich ein Verkanten der Last 114 in der Führung vermeiden.

Wirken Schwerkraft und Kraft der "Auswurffedern" gegeneinander, so ist zum weiteren Auslösen des Gewichts noch eine Auftriebskomponente erforderlich.

Das gesamte Konzept hat den Vorteil, dass in den Haken 101 eine große Spanne an unterschiedlich schweren Lasten eingehängt werden kann, ohne dass dabei die zum Auslösen, d.h. dem Freigeben der Last 114 benötigte Energie zunimmt. Weiterhin werden keine Teile der Vorrichtung mit der Last 114 zusammen abgeworfen, so dass ein Wiederverwenden ohne weiteres möglich ist.

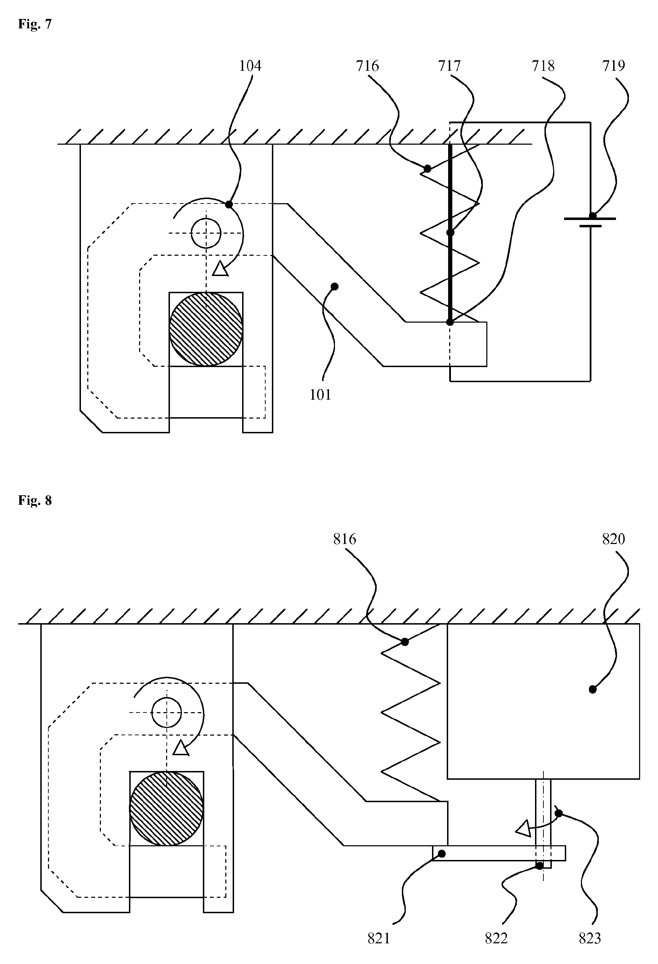

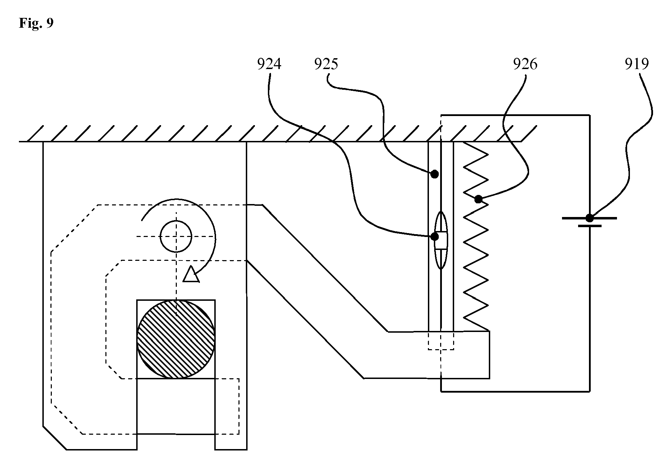

In Fig. 7 bis Fig. 9 sind einige unterschiedliche Ausführungsvarianten zur Bewegung des Hakens 101 dargestellt.

Eine bevorzugte Ausführungsvariante sieht eine Druckfeder 716 vor, welche das Drehmoment zum Öffnen durch eine Druckkraft an der Stelle 718 der Vorrichtung aufbringt. Im geschlossenen Zustand verhindert ein Draht 717, zum Beispiel ein Titandraht, das Öffnen der Vorrichtung. Mittels eines kurzen Stromstoß über den Draht 717, zum Beispiel durch eine Entladung eines Kondensators oder einer anderen Energiequelle 719, wird seine Struktur durch Joule'sche Wärme geschwächt, so dass dieser unter der Kraft der Druckfeder 716 nachgibt und die Druckfeder 716 die Vorrichtung öffnet, wodurch die Last 114 freigegeben wird. Ein großer Vorteil dieses Aufbaus ist, dass ein geeignet ausgewählter Draht unter dem Einfluss von Seewasser nach einer bestimmten Zeit nachgibt und sich dadurch auch bei totalem Energieausfall die Last 114 löst.

Eine weitere bevorzugte Ausführungsvariante sieht einen elektromechanischen Aktor 820 vor. Hierbei verhindert ein Rückhaltemechanismus mit einem Hebel 821, welcher an der Welle eines Elektromotors oder elektromagnetischen Drehrelais 822 befestigt ist, das Öffnen der Vorrichtung durch die Druckfeder 816. Wird der Rotationsaktor mit Energie versorgt und damit der Stift aus seiner Ausgangslage in Richtung 823 bewegt, so rotiert der Haken 101 aufgrund der Druckfeder um seinen Lagerpunkt und die Vorrichtung wird geöffnet.

Eine andere Ausführungsvariante nutzt die mechanische Druckfeder 926 und einen Rückhaltemechanismus mit einem Kunststoffbolzen 925 und einer kleinen Zündkapsel 924 in dessen Mitte, die durch einen elektrischen Impuls der Energiequelle 919 ein leicht entzündliches Material zur exothermen Reaktion bringt, wodurch der Haken 101 in Drehung versetzt wird und sich die Vorrichtung öffnet.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungen von Bedeutung sein.

## Patentansprüche

1. Auslösevorrichtung für eine Last (114) an einer Einrichtung, insbesondere einer Unterwassereinrichtung, mit:
- einer Hakeneinrichtung, bei der ein Haken (101) an einer Hakenhalteeinrichtung um eine Drehachse (202) drehbar gelagert und mit Hilfe eines Hakenbetätigungsmechanismus zwischen einer geschlossenen und einer ausgelösten Stellung mittels Drehen um die Drehachse (202) verlagerbar ist,
- einer Lastauflage (206), die an dem Haken (101) gebildet ist und in welcher ein Haltelement (112) der Last (114) im nicht ausgelösten Zustand aufliegt, und
- einer Zwangsführung, die konfiguriert ist, die Last (114) beim Auslösen entlang einer Auswurfrichtung (207) zu führen, wobei beim Aufliegen des Haltelementes (112) der Last (114) auf der Lastauflage (206) der Haken (101) in der geschlossenen Stellung, hinsichtlich eines von der Last auf den Haken (101) bezüglich der Drehung um die Drehachse (202) ausgeübten Drehmomentes, drehmomentfrei ist, **gekennzeichnet durch** eine Auslöseunterstützungseinrichtung (514), die konfiguriert ist, eine unterstützende Auswurfkraft mit einer Kraftkomponente bereitzustellen, die parallel zur Auswurfrichtung (207) wirkt.

2. Auslösevorrichtung nach Anspruch 1, **dadurch gekennzeichnet, dass** eine Verbindungslinie zwischen der Drehachse (202) und der Lastauflage (206) im Wesentlichen parallel zur Auswurfrichtung (207) verlaufend gebildet ist.

3. Auslösevorrichtung nach Anspruch 1 oder 2, **dadurch gekennzeichnet, dass** die Zwangsführung wenigstens teilweise in der Hakenhalteinrichtung gebildet ist.

4. Auslösevorrichtung nach mindestens einem der vorangehenden Ansprüche, **dadurch gekennzeichnet, dass** die Zwangsführung mit einer entlang der Auswurfrichtung verlaufenden Nut gebildet ist.

5. Auslösevorrichtung nach mindestens einem der vorangehenden Ansprüche, **dadurch gekennzeichnet, dass** die Hakenhalteeinrichtung konfiguriert ist, den Haken (101) beim Verlagern zwischen der geschlossenen und der ausgelösten Stellung seitlich zu Führen.

6. Auslösevorrichtung nach Anspruch 5, **dadurch gekennzeichnet, dass** Auslöseunterstützungseinrichtung mehrseitig der Zwangsführung wirkend gebildet ist.

7. Auslösevorrichtung nach mindestens einem der vorangehenden Ansprüche, dadurch **g e - kennzeichnet,** dass mit der Hakenhalteeinrichtung ein Anschlag für das Haltelement (112) der Last (114) und / oder die Last (114) selbst gebildet ist.

8. Auslösevorrichtung nach mindestens einem der vorangehenden Ansprüche, **gekennzeichnet durch** eine Lastführung, die konfiguriert ist, beim Auslösen und / oder beim Ankoppeln der Last (114) mit einem Abschnitt an der Last (114) selbst diese führend zusammen zu wirken.

9. Anordnung mit Auslösevorrichtung nach mindestens einem der Ansprüche 1 bis 8 und einem Hakenbetätigungsmechanismus, der konfiguriert ist, den Haken (110) mittels Druckbeaufschlagung aus der geschlossenen Stellung zu bewegen.

10. Anordnung nach Anspruch 9, **dadurch gekennzeichnet, dass** der Hakenbetätigungsmechanismus mit einem Rückhaltemechanismus gebildet ist, der für eine auf den Haken (101) wirkende Betätigungseinrichtung eine Rückhaltekraft bereitstellt.

11. Anordnung nach Anspruch 10, **dadurch gekennzeichnet, dass** der Rückhaltemechanismus mit mindestens einer Rückhalteeinrichtung ausgewählt aus der folgenden Gruppe von Rückhalteeinrichtungen gebildet ist: Schmelzeinrichtung, elektromechanischer Aktor und Halteeinrichtung mit Zündmechanismus.

12. Unterwassereinrichtung mit einer Auslösevorrichtung nach mindestens einem der vorangehenden Ansprüche.

## Claims

1. A release apparatus for a load (114) on a device, in particular on an underwater device, having:
- a hook device, with which a hook (101) is mounted on a hook-holding device such that it can rotate about a rotational axis (202) and can be displaced between a closed and a released position by rotation about the rotational axis (202) with the aid of a hook actuation mechanism,
- a load rest (206), which is formed on the hook (101) and in which a holding element (112) of the load (114) rests when in the non-released state, and
- a restricted guidance device, which is configured to guide the load (114) in an ejection direction (207) when released,
wherein, when the holding element (112) of the load (114) rests on the load rest (206), the hook (101) in the closed position is torque-free with respect to a torque exerted by the load on the hook (101) in relation to the rotation about the rotational axis (202), **c h a r a c t e r i s e d** by a release support device (514), which is configured to provide a supporting ejection force with a force component which acts parallel to the ejection direction (207).

2. The release apparatus according to claim 1, **characterised in that** a connection line between the rotational axis (202) and the load rest (206) is formed substantially parallel to the ejection direction (207).

3. The release apparatus according to claim 1 or 2, **characterised in that** the restricted guidance device is formed at least partially in the hook-holding device.

4. The release apparatus according to at least one of the preceding claims, **characterised in that** the restricted guidance device is formed with a groove running in the ejection direction.

5. The release apparatus according to at least one of the preceding claims, **characterised in that** the hook-holding device is configured to guide the hook (101) laterally during displacement between the closed and the released position.

6. The release apparatus according to Claim 5, **characterised in that** the release support device is formed to act on multiple sides of the restricted guidance device.

7. The release apparatus according to at least one of the preceding claims, **characterised in that** a stop is formed for the holding element (112) of the load (114) and/or the load (114) itself with the hook-holding device.

8. The release apparatus according to at least one of the preceding claims, **characterised by** a load guide, which is configured to interact with a section on the load (114) itself in a manner guiding the same when the load (114) is released and/or coupled.

9. An arrangement comprising a release apparatus according to at least one of the claims 1 to 8 and a hook actuation mechanism, which is configured to move the hook (101) out of the closed position by the application of compressive force.

10. The arrangement according to claim 9, c**haracterised** in that the hook actuation mechanism is formed with a retaining mechanism, which provides a retaining force for an actuation device acting on the hook (101).

11. The arrangement according to claim 10, **characterised in that** the retaining mechanism with at least one retaining device is selected from the following group of retaining devices: melting device, electromechanical actuator and holding device with ignition mechanism.

12. An underwater device having a release apparatus according to at least one of the preceding claims.

## Revendications

1. Dispositif de déclenchement pour une charge (114) sur un système, notamment un système sous-aquatique, avec:
- un système à crochet, sur lequel le crochet (101) est logé sur un système de maintien du crochet en étant rotatif autour d'un axe de rotation (202) et est déplaçable à l'aide d'un mécanisme de manoeuvre du crochet entre une position fermée et une position déclenchée au moyen d'une rotation autour de l'axe de rotation (202),
- un support de charge (206) qui est formé sur le crochet (101) et dans lequel s'appuie un élément de maintien (112) de la charge (114) dans l'état non déclenché et
- un guidage forcé qui est configuré pour lors du déclenchement, guider la charge (114) le long d'une direction d'éjection (207), lorsque l'élément de maintien (112) de la charge (114) repose sur le support de charge (206), le crochet (101) dans la position fermée étant exempt de tout couple exercé par la charge sur le crochet (101) en ce qui concerne la rotation autour de l'axe de rotation (202),
**caractérisé par** un système d'assistance au déclenchement (514) qui est configuré pour mettre à disposition une force d'assistance à l'éjection avec une composante de force qui agit à la parallèle de la direction d'éjection (207).

2. Dispositif de déclenchement selon la revendication 1, **caractérisé en ce qu'**une ligne de liaison entre l'axe de rotation (202) et le support de charge (206) est formée en s'étendant sensiblement à la parallèle de la direction d'éjection (207).

3. Dispositif de déclenchement selon la revendication 1 ou la revendication 2, **caractérisé en ce que** le guidage forcé est formé au moins en partie dans le système de maintien du crochet.

4. Dispositif de déclenchement selon au moins l'une quelconque des revendications précédentes, **caractérisé en ce que** la guidage forcé est formé avec une rainure s'étendant le long de la direction d'éjection.

5. Dispositif de déclenchement selon au moins l'une quelconque des revendications précédentes, **caractérisé en ce que** système de maintien du crochet est configuré pour guider latéralement le crochet (101) lors du déplacement entre la position fermée et la position déclenchée.

6. Dispositif de déclenchement selon la revendication 5, **caractérisé en ce que** le système d'assistance au déclenchement est formé pour agir multilatéralement sur le guidage forcé.

7. Dispositif de déclenchement selon au moins l'une quelconque des revendications précédentes, **caractérisé en ce qu'**avec le système de maintien du crochet est formée une butée pour l'élément de maintien (112) de la charge (114) et/ou la charge (114) proprement dite.

8. Dispositif de déclenchement selon au moins l'une quelconque des revendications précédentes, **caractérisé par** un guidage de la charge qui est configuré pour agir avec une partie sur la charge (114) même, en guidant celle-ci, lors du déclenchement et/ou de l'accouplement de la charge (114).

9. Agencement avec un dispositif selon au moins l'une quelconque des revendications 1 à 8 et un mécanisme de manoeuvre du crochet qui est configuré pour déplacer le crochet (110) hors de la position fermée, en le soumettant à une pression.

10. Agencement selon la revendication 9, **caractérisé en ce que** le mécanisme de manoeuvre de la charge est formé avec un mécanisme de retenue qui met à disposition une force de retenue pour un système de manoeuvre agissant sur le crochet (101).

11. Agencement selon la revendication 10, **caractérisé en ce que** le mécanisme de retenue est formé avec au moins un système de retenue, choisi parmi le groupe des systèmes de retenue suivants : système de fusion, actionneur électromécanique et système de maintien avec mécanisme d'amorçage.

12. Système sous-aquatique avec un dispositif de déclenchement selon au moins l'une quelconque des revendications précédentes.
